(19) Europäisches Patentamt
European Patent Office
Office européen des brevets

(11) EP 3 454 285 A1

(12) EUROPEAN PATENT APPLICATION

(43) Date of publication:
13.03.2019 Bulletin 2019/11

(51) Int Cl.:
G06Q 40/08 (2012.01)     G06N 3/02 (2006.01)
G06N 99/00 (2019.01)     G06Q 50/22 (2018.01)

(21) Application number: 17190354.5

(22) Date of filing: 11.09.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: FUJITSU LIMITED
Kanagawa 211-8588 (JP)

(72) Inventor: BHASKARAN, Balakrishnan
Exeter, Devon EX4 9DR (GB)

(74) Representative: Haseltine Lake LLP
Lincoln House, 5th Floor
300 High Holborn
London WC1V 7JH (GB)

(54) **AN APPARATUS AND METHOD FOR ASSESSING FLOODING BEHAVIOUR AND AN APPARATUS AND METHOD FOR PREDICTING A FLOOD PROPERTY**

(57) An apparatus for assessing the behaviour of flooding in a cell of interest from a plurality of cells in a study region, the apparatus comprising: a data storer to receive and store flooding information corresponding to the plurality of cells and comprising historical flood observations for available cells of the plurality of cells; a processor to process the flooding information stored in the data storer; and a modeller to train a machine learning algorithm, using the processed flooding information, to obtain a prediction model for predicting a flood property of the cell of interest; and an apparatus for predicting a flood property of a cell of interest from a plurality of cells in a study region, the apparatus comprising: a predictor to predict the flood property of the cell of interest using a prediction model; and an outputter to output the predicted flood property.

Figure 3

**Description**

The present invention relates to an apparatus and method for assessing and predicting flooding and its behaviour.

Background of the Invention

Flooding may have a severe environmental impact on an area, as well as a health impact on affected individuals, particularly in highly populated and built-up areas. There are many health risks associated with flooding, such as the risk of accidents, drowning, contamination of water and spread of disease. Therefore assessing flood behaviour and predicting flood properties has many beneficial applications.

Considering, for example, the health aspects discussed above, assessing flood behaviour at locations may be beneficial for identifying and mitigating risks to vulnerable people, such as the elderly and children. In the planning sector, the suitability of proposed sites which are likely to contain vulnerable people, such as hospitals, doctor's surgeries and schools, may also be assessed. Developing the infrastructure of residential areas, such as transport and services, may also be assessed with respect to flooding information. Determining flood behaviour is also necessary when determining the requirement for flood defences and planning emergency response and resource requirements for a given area.

Assessing flooding behaviour also has possible applications in other fields, such as, for example, in the building sector for determining the flood risk of sites, and the insurance sector for determining insurance premiums in locations with little or no historic flood observations. For example, embodiments of the present invention may be utilised by an insurer wanting to know the probability of a location (or facility) being inundated by a certain level of flooding, where no historical information exists.

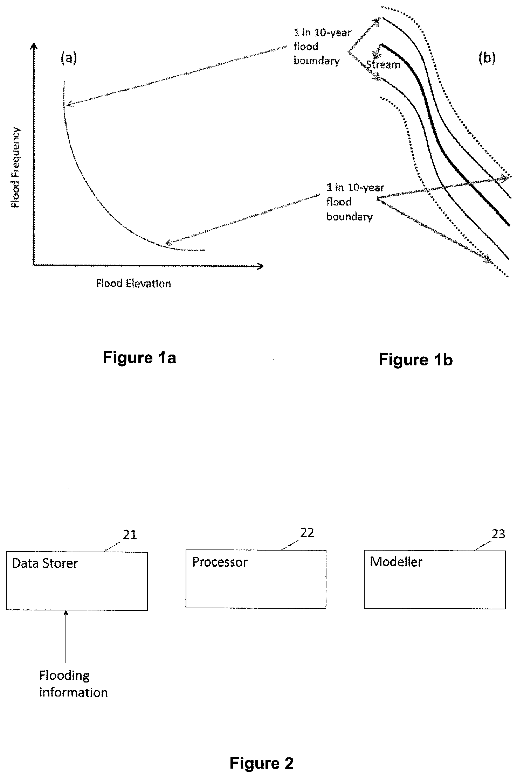

Known methods of assessing flood risk at a given location rely on historical flooding information that is available for the location. For example, the flooding information may include information about flood events, such as flood elevations for a water body and related flood frequencies for a given location. A flood frequency-flood elevation curve may then be derived from this information, with an example of such a curve shown in Figure 1(a). The frequency-elevation curve is then used to generate flood maps for the flood plain associated with the water body using a digital elevation model, as shown in Figure 1(b). In other cases, the frequency-elevation curve may be plotted for a particular point of interest (for example, high value infrastructure or populations of more vulnerable people), if observations are available.

Summary of the Invention

In various situations though, and particularly in many countries, the required historical flood observations are not readily available. In such cases, hydrological models are deployed to fill the gaps. However, these models are expensive to deploy and have a large processing time, especially if the modelling domain is much larger (for example, for regional and country level assessments). Multiple "what if" scenarios need to be carried out to determine occurrence probability of flood events with a predefined intensity.

It is therefore desirable to be able to assess flood behaviour and determine flood properties, such as flood level or flood frequency, at locations for which the historical information is not available and/or is not sufficient to obtain a flood frequency-flood elevation curve, without requiring expensive modelling methods. Embodiments of the present invention employ machine learning algorithms to assess flooding behaviour and/or predict flood properties at one or more particular locations of interest.

Embodiments of the present invention may have applications in those fields in which flooding analysis is beneficial, including, but not limited to the environment, health and safety, and infrastructure development. Due to the wide range of applications in which flood assessment may be used, embodiments of present invention are not limited to a specific application and any discussion of specific applications is provided by way of example to aid the understanding of these embodiments.

According to an embodiment of the invention, there is provided an apparatus for assessing the behaviour of flooding in a cell of interest from a plurality of cells in a study region, the apparatus comprising: a data storer to receive and store flooding information corresponding to the plurality of cells and comprising historical flood observations for available cells of the plurality of cells; a processor to process the flooding information stored in the data storer; and a modeller to train a machine learning algorithm, using the processed flooding information, to obtain a prediction model for predicting a flood property of the cell of interest.

Thus it is possible to assess the behaviour of flooding at a location corresponding to the cell of interest using flooding information of the cells in the study region and historical flood observations of some of the cells in the study region to obtain a prediction model. The behaviour of flooding may refer to any information relating to flooding, such as a flood level or frequency of flooding. The flood level refers to the height of flood water at a given location and the frequency refers to how often the flood waters reach a certain level.

Embodiments of the present invention are therefore capable of assessing the behaviour of flooding in which flooding information is processed to train a machine learning algorithm and obtain a prediction model. Embodiments further extend to the use of the obtained prediction model to predict a flood property at a location. That is, embodiments of the present invention may be used to predict flood properties at particular locations of interest, at which, for example, recorded flood data may not exist or may not be sufficient for prediction purposes.

The invention may be applied in any field in which it is beneficial to predict flood properties at particular locations. Such fields may include, but are not limited to, the environment, health and safety, and infrastructure development.

The flooding information may comprise the historical flood observations and information relating to the cell, such as land-surface characteristics of the cell, and preferably the characteristics for each cell. The historical flood observations may be previously acquired flood data for a cell and may be acquired from government agencies and/or may be input by a user. That is, the historical flood observations may be a frequency-elevation curve for the cell, may be the data used to acquire a frequency-elevation curve, or may be data extracted from a frequency-elevation curve. Historical flood observations may not be available for all cells in the study region and, in particular, may not be available for the cell of interest. In embodiments involving input by a user, the data storer may preferably comprise a user interface.

The flooding information may be received from any suitable source that provides information, such as surface characteristics, relating to the cell. This information may be provided from satellites, such as, for example, Sentinel satellite series, and/or may be input by a user. The information may be classified and tagged as it is received, in real-time, before being stored and processed. The flooding information of cells outside of the study region may also be used to train the machine learning algorithm.

For a given set of feature vectors (independent variables) there is a corresponding return period (dependent variable or label). For training the model, feature vectors and the corresponding labels are required. This feature vector and the corresponding label may correspond to a cell that is outside the study region. However, it is preferable that the cell has similar surface characteristics to one or more cells of the study as this may result in a more accurate machine learning algorithm. For example, training data may be applied to a cell in the study region from a cell outside of the study region with similar surface characteristics. Historical flood observations may be considered as relating to the labels, while training data may be considered as comprising the labels and features.

The cell of interest may be a cell in the study region for which there are no historical flood observations. A cell described as having no historical flood observations may also comprise a cell for which there are a small number or a limited amount of historical flood observations available but that are not sufficient for assessing flood behaviour using the known methods discussed in the background of the invention above. A limited amount of historical flood observations may also comprise inaccurate flood observations or flood observations that are outdated, for example, due to a change in the land-surface characteristics or development of flood defences. Thus, historical flood observations may be available for the cell of interest but may not be suitable for assessing flood behaviour.

The study region may refer to a geographical area, such as, for example, a flood plain, which is split into a number of individual cells. The cell of interest is selected from among the cells of the study region. The cell of interest corresponds to a location or area at which determination of flooding behaviour is desired. The cell of interest may be identified by a user or may be automatically determined by the system. For example, the system may identify a cell of interest from among the cells in the study region if the cell fulfils certain criteria, such as if the cell is within a given radius of a point of interest or if the cell does not have historical flood observations.

The modeller may use any machine learning algorithm to obtain the prediction model, such as, for example, Artificial Neural Network, Support Vector Machine Classification, Random Forests and Nearest Neighbours. The type of algorithm used may be determined by the application of the apparatus and the available flooding information. The number of cells for which there are historical flood observations may also determine the machine learning algorithm that is used to obtain the prediction model.

According to embodiments of the invention, it is possible to obtain a prediction model to predict flood properties, for example, flood level and flood frequency, at a cell of interest in the study region, even if there are no historical flood observations available for the cell. The prediction model may be used to determine, for example, how frequently a certain flood level will occur at a given location corresponding to the cell of interest. This may be used, for example, to determine the environmental impacts of flooding, the health impacts of flooding and individuals likely to be affected, and/or how to develop the infrastructure of an area.

The processing of the flooding information may preferably comprise: fixing a flood frequency; extracting, from the historical flood observations, a flood level and a corresponding cell at which the fixed flood frequency has occurred; generating a labelled vector for the cell at which the fixed flood frequency has occurred; and generating an unlabelled vector for the cell of interest, for which prediction is required. That is, a flood frequency is fixed and, from the historical flood observations, a flood level corresponding to the fixed frequency is extracted. This is true for each cell at which the fixed frequency has occurred, such that a separate labelled vector is generated for each of the cells. The flood frequency may be chosen, selected or input by a user, so as to be fixed. Alternatively or additionally, the flood frequency to be fixed may be dependent on the historical flood observations available for the cell(s) and/or may be based on the desired properties of the prediction model. The data storer may provide a data source for the processing and so the processor preferably generates the feature vector.

Alternatively, the approach may be reversed such that the flood level may be fixed and the flood frequency corresponding to the level may be extracted for each cell at which the fixed flood level has occurred. The flood frequency may be represented in terms of years, for example, 1 in 10 years, and the flood level may be represented in terms of metres, for example, 5 metres. Thus the extracted information identifies that a flood frequency of 1 in x years corresponds to a flood level of y metres.

In a preferred embodiment, the labelled vector (labelled feature vector) comprises the following elements and is labelled with one of the elements: the fixed flood frequency; the extracted flood level; a level coefficient corresponding to the flood level; a vector feature corresponding to the cell at which the fixed flood frequency has occurred; and a feature coefficient corresponding to the vector feature.

The labelled vector is preferably labelled with the flood frequency. This may be true, for example, if the flood frequency is fixed in the processing. The labelled vector may alternatively be labelled with the flood level, which may be the case in the alternative arrangement of the processing in which the flood level is fixed. The labelled vector may comprise more than one vector feature, with each vector feature having a corresponding feature coefficient.

The coefficients of the labelled vector may be calculated by the machine learning algorithm, i.e. the level coefficient and the one or more feature coefficients are estimated by the machine learning algorithm. The machine learning algorithm may estimate the coefficients based on the known values of the other labelled vector elements for the cell, such as the flood frequency, flood level and the selected vector features.

The prediction model preferably comprises the unlabelled vector and coefficients derived from the estimated coefficients of the labelled vector, i.e. the estimated level coefficient and the estimated feature coefficient(s). That is, the prediction model may be made up of the unlabelled vector and corresponding coefficients, which are obtained using the estimated coefficients of the labelled vector.

The unlabelled vector (unlabelled feature vector) may comprise the following elements: a flood frequency; a flood level; and a vector feature corresponding to the cell of interest; and wherein one of the unlabelled vector elements is unknown, one of the unlabelled vector elements is input by a user and the remaining unlabelled vector elements are acquired from the flooding information. The unknown element may be the subject of the unlabelled vector. All but one of the other elements may be acquired from the flooding information and may relate to surface characteristics of the cell that, for example, impact the flooding behaviour of the cell. The remaining element may be input by the user as a desired characteristic of the flooding behaviour for use in the prediction model. For example, the flood frequency may be unknown and the user may input a flooding level for which they wish to predict the flood frequency, or vice versa.

The unlabelled vector may comprise more than one vector feature. Each vector feature has a corresponding feature coefficient in the prediction model, which is derived from the estimated coefficients of the labelled vector. The label of the labelled vector may correspond to the unknown element of the unlabelled vector. That is, the unknown element may be the same element with which the labelled vector is labelled. The machine learning algorithm may therefore be trained and the prediction model may be obtained with respect to the unknown element. In a preferred embodiment, the labelled vector is labelled with the flood frequency and so the unknown element of the unlabelled vector is a flood frequency for the cell of interest. Alternatively, the labelled vector may be labelled with a flood level, such that the unknown element of the unlabelled vector is a flood level for the cell of interest.

In a preferred embodiment the processor automatically selects the vector feature(s) based on which of the unlabelled vector elements is unknown. For example, if the flood frequency is the unknown element to be predicted by the prediction model, then the processor may determine that the use of one or more certain vector features is more appropriate for predicting flood frequency than the use of other vector features. The availability of vector features that may be derived from the flooding information may also be a contributing factor to the selection of the one or more vector features.

The preferred vector feature(s) relating to the unknown element may be selected by the processor using preferred lists of features that indicate which vector feature(s) should be used to determine the unknown element. If the preferred vector features are not available from the flooding information, then the processor may select alternative vector features and apply a dimension reduction technique. Alternatively, the vector features may be selected by a user.

The vector feature is preferably one of the following features and is acquired from the flooding information: a bias vector; land and surface characteristics; a horizontal distance from the nearest water body; a vertical distance from the nearest water body; a slope of the terrain; an observed flood level; and spectral information. Accordingly, if there are multiple vector features, then any combination of the above vector features may be used. Distance metrics may be measured from the point where the frequency-elevation curves are observed to the point where the flood risk behaviour is being assessed. The slope of the terrain may be defined in terms of the magnitude and the direction of the slope.

In a preferred embodiment, the processor augments the historical flood observations in the flooding information using a data augmenting technique to obtain artificial historical flood observations for a selected cell from the plurality of cells. The number of observations may therefore be increased and the training of the machine learning algorithm improved. The processor may obtain artificial flood observations if there is an insufficient number of historical flood observations available for the cells in the study region.

The data augmentation technique may apply small random perturbations to the vector in such a way that the resulting new vector will qualify to retain the same label as that of the vector from which it was derived. Thus, "$N$" number of perturbations may be applied to generate "$N$" new vectors, with the new vectors being the augmented data.

According to an embodiment of another aspect, there is provided an apparatus for predicting a flood property of a cell of interest from a plurality of cells in a study region, the apparatus comprising: a predictor to predict the flood property of the cell of interest using a prediction model; and an outputter to output the predicted flood property, wherein the prediction model is obtained according to embodiments of aspects of the invention. The outputter may be a display such as a display on a computer or a personal mobile device.

Thus the prediction model obtained according to embodiments of the present invention may be used to predict a flood property of a particular area or location of interest, such as, for example, the cell of interest noted above. The predicted flood property may comprise a flood frequency or a flood level of the cell of interest, i.e. the prediction model may be used to predict the frequency at which a certain level of flooding may be expected in the cell of interest, or the flood level associated with a particular frequency of flooding may be predicted.

The apparatus may preferably further comprise a notifier which issues a warning, alarm or notification if the predicted flood property passes a predetermined threshold. It is therefore possible to provide an alert if, for example, the predicted level of flooding exceeds a threshold or the frequency of flooding exceeds a threshold. The thresholds may be input by a user or may be determined by the characteristics and surroundings of the cell of interest. For example, the level of flooding which requires a notification may be different for each cell depending on characteristics of the cell or whether there is a high risk site, such as a hospital, nearby.

According to an embodiment of a further aspect of the invention, there is provided a method of assessing the behaviour of flooding in a cell of interest from a plurality of cells in a study region, the method comprising: receiving and storing flooding information corresponding to the plurality of cells and comprising historical flood observations for available cells of the plurality of cells; processing the stored flooding information; and training a machine learning algorithm using the processed flooding information to obtain a prediction model for predicting a flood property of the cell of interest from the plurality of cells.

According to an embodiment of a still further aspect of the invention, there is provided a method of predicting a flood property of a cell of interest from a plurality of cells in a study region, the method comprising: predicting the flood property of the cell of interest using a prediction model; and outputting the predicted flood property, wherein the prediction model is obtained according to embodiments of aspects of the invention.

Invention embodiments also extend to the use of the method and apparatus to predict a flood property. Thus in an embodiment of a still further aspect of the invention, there is provided a use of the method according to embodiments of aspects of the invention to predict a flood property, wherein the flood property to be predicted is selected by a user.

The invention may be implemented in digital electronic circuitry, or in computer hardware, firmware, software, or in combinations of them. The invention may be implemented as a computer program or computer program product, i.e., a computer program tangibly embodied in an information carrier, e.g., in a machine-readable storage device or in a propagated signal, for execution by, or to control the operation of, one or more hardware modules. A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a communication system environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The invention is described in terms of particular embodiments. Other embodiments are within the scope of the following claims. For example, the steps of the invention may be performed in a different order and still achieve desirable results.

The apparatus according to preferred embodiments is described as being capable of carrying out certain functions. This may be achieved by use of hardware or middleware or any other suitable system. In preferred embodiments, the configuration or arrangement is by software.

Elements of the invention have been described as separate units. The skilled reader will appreciate that these terms and their equivalents may refer to parts of the system that are spatially separate but combine to serve the function defined. Equally, the same physical parts of the system may provide two or more of the functions defined.

Features and sub-features of the method aspects may be applied to the apparatus aspects and vice versa.

Brief Description of the Drawings

Reference is made, by way of example only, to the accompanying drawings in which:

Figure 1a is a previously described schematic diagram illustrating a frequency-elevation curve;
Figure 1b is a previously described schematic diagram illustrating the corresponding locations of the frequency-elevation curve near a stream;
Figure 2 is a system diagram representing a general embodiment of an aspect of the invention;
Figure 3 is a flowchart representing a general embodiment of an aspect of the invention;
Figure 4 is a system diagram representing a general embodiment of another aspect of the invention;
Figure 5 is a flowchart representing a general embodiment of another aspect of the invention;
Figure 6 is a schematic diagram illustrating a study region split into cells and identifying locations at which historical flood observations are available according to an embodiment of an aspect of the invention;
Figure 7 is a block diagram illustrating a data storer according to an embodiment of an aspect of the invention;
Figure 8 is a block diagram illustrating a processor according to an embodiment of an aspect of the invention;
Figure 9 is a system block diagram illustrating an embodiment of an aspect of the invention; and
Figure 10 is a block diagram of a computing device embodying the present invention.

Figure 2 shows a system diagram of a general embodiment of an aspect of the invention for obtaining a prediction model using flooding information. The data storer 21 receives flooding information for the plurality of the cells in the study region and stores the received information. The processor 22 processes the stored information such that the information is prepared for use by the modeller 23. The modeller 23 then uses the processed information to train a machine learning algorithm, and a prediction model, which may be used for predicting a flood property of a cell of interest from among the cells in the study region, is obtained. The flooding information may comprise historical flood observations for some cells in the study region and surface characteristics of the cells in the study region and may be received from satellites and other external sources (not shown in Figure 2).

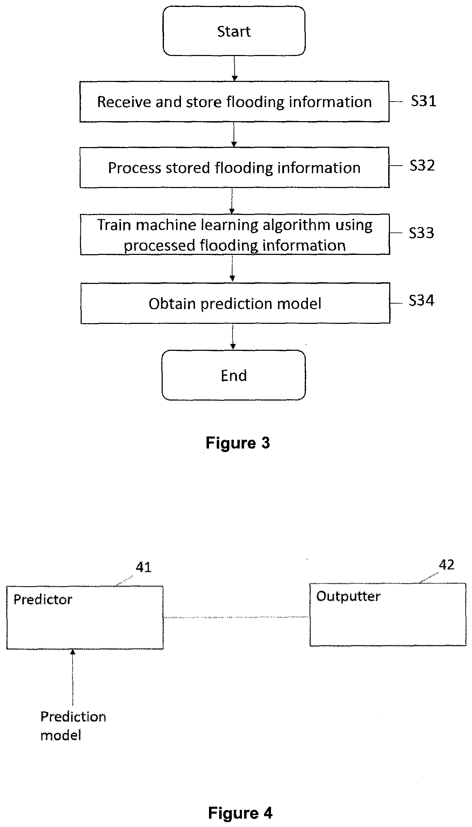

Figure 3 shows a flowchart of a general embodiment of an aspect of the invention for obtaining a prediction model using flooding information. In step S31 flooding information is received and stored. The flooding information is typically received from external sources and/or may be input by a user. In step S32 the stored flooding information is processed in preparation for training the machine learning algorithm in step S33. Finally, a prediction model for predicting a flood property is obtained as a result of training the machine learning algorithm in step S34.

Figure 4 shows a system diagram of a general embodiment of another aspect of the invention in which the obtained prediction model is used to predict a flood property of a cell of interest. The predictor 41 predicts a flood property of the cell of interest using a prediction model obtained according to embodiments of the present invention. The outputter 42 then outputs the predicted flood property, for example, to be viewed by a user. The predicted flood property may be, for example, a flood frequency of the cell of interest or a flood level of the cell of interest.

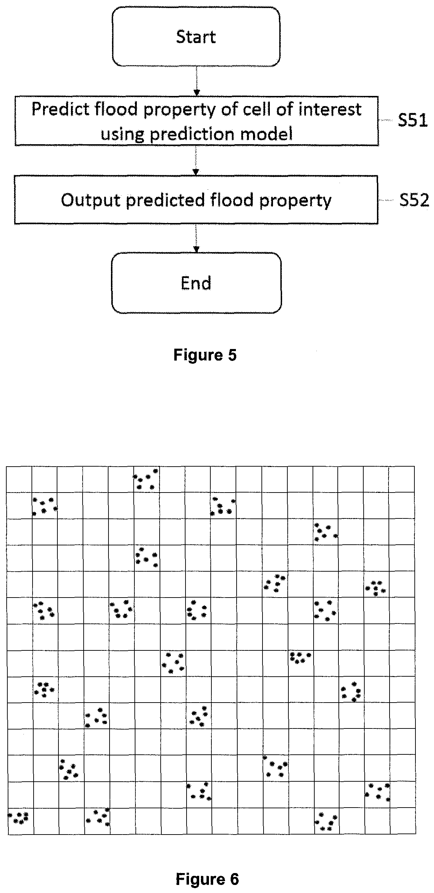

Figure 5 shows a flowchart of a general embodiment of another aspect of the invention in which a prediction model is used to predict a flood property. In step S51 the flood property of a cell of interest is predicted using a prediction model, such as the prediction model obtained according to embodiments of the invention. The predicted flood property is then output in step S52.

According to embodiments of the invention, the study region (for example, a flood plain) is divided into several cells, with the cells typically having a size of 30m x 30m ($900m^2$). For example, terrain and soil information may readily be provided by satellites at this level. The number of cells in the study region will naturally depend on the size of the study region and the size of the cells, but it is possible that the study region contains thousands or even millions of cells. Some of the cells in the study region with have historical flood observations available, for example, in the form of frequency-elevation curves. Table 1 shows an example of the frequency-elevation information that may be provided from historical flood observations for a given cell in the study region.

*Table 1: Example values from the frequency-elevation curve for a specific cell "A".*

| Flood Frequency | Flood Level |
|:---:|:---:|
| 1 in 10 years | 1m |

(continued)

| Flood Frequency | Flood Level |
| --- | --- |
| 1 in 20 years | 2m |
| 1 in 33 years | 3m |
| 1 in 50 years | 5m |
| 1 in 100 years | 8m |
| 1 in 500 years | 10m |

A similar set of frequency-elevation curves (or tables obtained from these curves) may be available for a number of the other cells in the study region. This information from the available cells is then used to train the machine learning algorithm, which may be an Artificial Neural Network (ANN). The type of machine learning algorithm that is used may be determined by the number of cells in the study region. For example, if there are thousands of cells in the study region, then a Nearest Neighbours algorithm may be used, yet, if there are millions of cells, an ANN may be more appropriate. It is also possible for historical flood observations for cells that are outside of the study region to be stored in the data storer and used to train the machine learning algorithm.

In the processing according to an embodiment of an aspect of the invention, the flood frequency is initially fixed, and flood levels and the locations at which the flood level occurs, corresponding to the fixed flood frequency, are then extracted. For example, if the flood frequency is fixed as "1 in 10 years", then the frequency-elevation curves of all cells with historical information are searched to determine the corresponding flood levels at which flooding with a frequency of "1 in 10 years" occurs and the cells in which this frequency of flooding occurs. For the example shown in Table 1, the flood level that occurs with a frequency of "1 in 10 years" is 1 m. For another exemplary cell (cell B), the frequency of "1 in 10 years" may happen only when the flood level reaches 2m at the measuring station (i.e. the point at which the historical flood observations are measured). The flood level in cell B for the same flood frequency may differ from that in cell A due to different land and surface characteristics (for example, higher elevation) of the cells.

For each cell that has historical flood observations corresponding to the fixed flood frequency available, the cell properties, for example, the land-surface characteristics, may also be extracted from the flooding information for each cell.

The fixing of the flood frequencies in the processing may extend to multiple flood frequencies, for example, fixing each of the six flood frequencies shown in Table 1 above. As with the process described above, the corresponding flood levels for the cell are searched for in the historical flood observations, along with properties of the cells. This results in six classes of flood frequency. The fixing of six flood frequencies is described as an example only, and any number of flood frequencies may be fixed. If finer/coarser classes of flood frequency are required, then finer/coarser classes will be derived from the frequency-elevation curves, prior to training the machine learning algorithm. This derivation of finer or coarser classes may be automatically carried out by the processor, for example, if requested by the user.

Figure 6 shows a schematic diagram of a study region split into cells and identifying locations at which historical flood observations are available according to an embodiment of an aspect of the invention. Six flood frequency classes have been fixed in the exemplary study region of Figure 6, with the frequencies fixed for cells at which historical flood observations corresponding to the fixed flood frequencies are available. Thus, for each available cell, there are six classes corresponding to six flood frequencies.

The values of flood frequency are drawn from the frequency-elevation curves. It is therefore possible to derive as many flood frequency classes as is required through interpolation of the curves. The processor may automatically derive the classes if necessary, depending on the available historical flood observations.

A labelled vector is generated for each fixed flood frequency for each cell for which corresponding flood observations are available. Once the cells, for which historical flood observations are available, have been allocated to one or more of the six flood frequency classes, and the labelled vectors have been generated, the flooding information has been sufficiently processed to train the machine learning algorithm. This processing of the data assists the trained machine learning algorithm to obtain a prediction model for predicting a flood property of a cell of interest.

This may be applied to an example application, such as determining the flood frequency of a site in order to manage flood response and resources in a given area. Consider in this example that the land-surface characteristics of the cell are known and it is also known that if the flood level reaches 3m at a nearby measuring station, then the local flood response resources will need to be upgraded. If the information of the cell and flood level is input to the prediction model obtained from the machine learning algorithm, such as an ANN or Random Forests, then a flood property, in this case how frequently this flooding event is likely to occur at the location, may be predicted.

An unlabelled vector, which corresponds to the cell of interest, is also generated in the processing. The unlabelled vector comprises a flood frequency of the cell of interest, a flood level of the cell of interest and cell characteristics of the cell of interest. The flood frequency and flood level of the unlabelled vector may be unknown and may be determined as the flood properties to be predicted by the prediction model. One of the unknown elements may be input by a user as a desired parameter and the prediction model may then be used to determine the other unknown element that corresponds to the parameter input by the user.

The processing is discussed above with respect to fixing the flood frequency. However, in an alternative arrangement, the roles of the flood level and flood frequency may be reversed, such that one or more flood levels are fixed. The flood frequencies corresponding to these flood levels are then extracted from the historical flood observations of the available cells.

The machine learning algorithm may be trained using a labelled set of features, which are included in the labelled vector. For example, for each cell in the study region, the following information (features) is available:

- the horizontal distance from the nearest water body;
- the vertical distance from the nearest water body;
- the vertical terrain elevation from the mean sea-level;
- the slope of the terrain; and
- the observed flood level.

Distance metrics are measured from the point where the frequency-elevation curves are observed (that is, where the six classes are available in the example discussed above). Since the behaviour of flooding is most likely observed at a location at which historical flood observations are unavailable or insufficient, the distance metrics of the above features are measured from the point at which the flood risk assessment is required.

In addition to the above vector features, spectral information, i.e. the intensities of wavelengths of light observed within a predefined set of bands, may also be used as a vector feature to determine land-surface characteristics of cells. For example, Landsat-8 satellite provides this type of information for eleven spectral bands at a range of spatial resolutions from 30m x 30m to 100m x 100m cell blocks for the entire globe. This information may therefore be included in the flooding information which the data storer receives and stores.

As shown in Figure 2, the apparatus according to an embodiment of an aspect of the invention comprises a data storer (data unit), a processor (processing system), and a modeller, which may be provided as a computer node (for example, high performance computing), for training the machine learning algorithm and obtaining the prediction model. The apparatus may further comprise a user interface and/or a display, for example, a computer screen (not shown in Figure 2). An ANN will be used as an example of the machine learning algorithm in the following discussion.

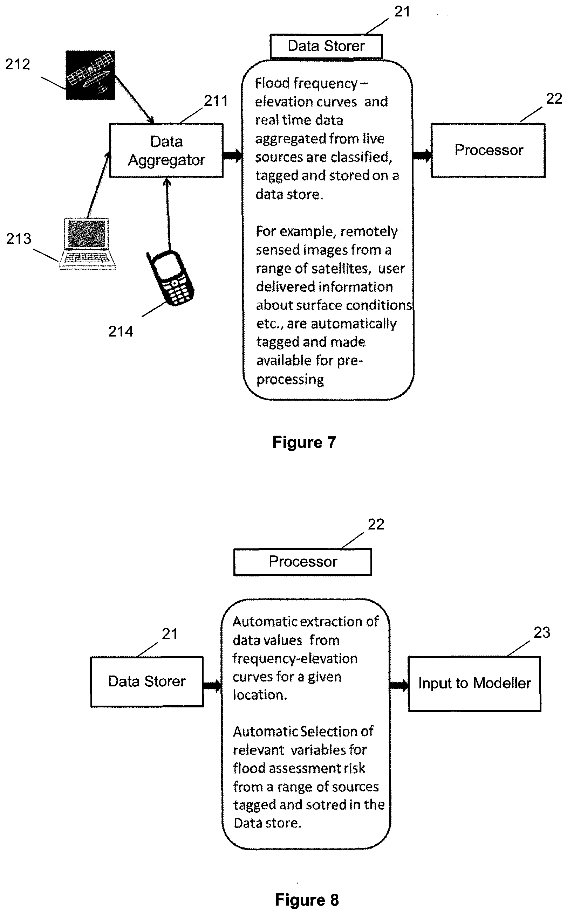

Figure 7 is a block diagram showing the functions of a data storer according to an embodiment of an aspect of the invention. A data aggregator 211 receives information from one or more sources 212, 213, 214 to be stored by the data storer 21 and then processed by the processor 22.

The data storer receives and stores flooding information comprising information relating to surface characteristics from a range of satellites and/or information delivered by a user, for example, for a given location. The required information is classified and tagged, in real-time, to make it available for further processing. In addition to this, the observed flood frequency-elevation curves (historical flood observations) for all available stations/locations within the study region or similar relevant area are also stored. The observations are usually available from government agencies (for example, the Environment Agency in the UK) and/or may be supplied by a user.

For training the ANN, the labelled vector generated in the processing is labelled with a flood frequency, for example, one of the six flood frequency classes shown in Table 1 above. This labelled vector will contain the fixed flood frequency and the corresponding water elevation values, along with the vector of the selected vector features. The labelled vector will have a flood frequency label, where this information is available, i.e. the feature vector is labelled with the flood frequency. A labelled vector with a label of a flood frequency for a given flood level, or vice versa, is generated for all cells in which the information (historical flood observations relating to the flood frequency/level) is available.

The data storer also provides the unlabelled vector relating to the cell of interest (e.g. the vector with no flood frequency or flood level values). The cell of interest corresponds to a location at which values of flood-frequency class are to be predicted as an output for a predefined value of flood elevation level (for example, defined by the user) or vice versa. The labelled vector is used to train the model and the unlabelled vector is used to predict the flood property, using the trained model.

Figure 8 is a block diagram showing the functions of a processor according to an embodiment of an aspect of the invention. The processor 22, which may also be referred to as a processing unit, receives information from the data storer 21 to be processed before being passed to the modeller 23.

The processor retrieves the data available from the data storer and labels it for further processing. One of the key functions of the processor is to automatically select the labelled vector associated with the corresponding flood frequency labels, from the data storer. For each label there is a corresponding labelled vector and vector features may be selected accordingly. For example, out of eleven spectral bands available on the Landsat-8 satellite, the most appropriate bands relevant to the problem may be automatically chosen by the processing system. As an example, for the assessment of flood risk, information obtained from the first seven spectral bands of the Landsat-8 satellite may be selected. The processing system may also select a different set of spectral bands for a different type of problem (such as, for example, identification and classification of land-sea boundaries or deserts etc.).

The information may contain more vector features than those discussed above, or it may not contain all of those features. In such cases, the processor may employ a standard dimensionality reduction or feature selection method to identify the required features and thus automatically select the vector features.

The processing system may access information obtained from other satellites (for example, the Sentinel satellite series), that is stored in the data store. In an embodiment, the processing system will automatically interpolate or extrapolate, as requested by the user, to a common grid cell. That is, the acquired data may be interpolated/extrapolated to the size of the cells in the study region.

In this particular case, the labelled vector consists of twelve vector feature elements (seven spectral band elements and five relating to land configuration information, such as those discussed previously). The chosen features describe, for example, land configuration, vegetation and meteorological characteristics. They may be acquired from the flooding information stored in the data storer. Land characteristics define the orientation, elevation, slope and vertical/horizontal distances from a water body. Any other land feature describing these characteristics may additionally or alternatively be used here.

Similarly, the Landsat-8 satellite spectral information provides information on the type of surface/vegetation characteristics. For example, a 30m x 30m ($900m^2$) cell may be a grassland, a rainforest, a desert etc. So any other variables providing this information from other sources may alternatively or additionally be used here. The labelled vectors for all the locations is made available for training the ANN.

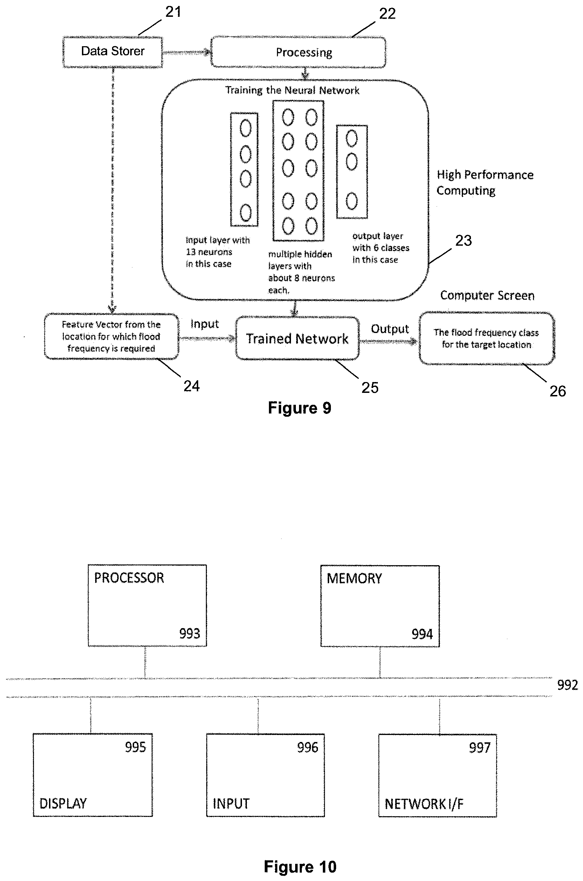

Figure 9 is a system block diagram showing an embodiment of an aspect of the invention demonstrating an exemplary implementation of the prediction system. The diagram shows the relationship between the data storer 21, the processor 22 and the modeller 23 used to train the machine learning algorithm, such as an ANN. The diagram also shows the unlabelled vector 24 relating to the cell of interest and its interaction with the prediction model 25 of the trained network which may be used to predict a flood property, such as a flood frequency for a given flood level. The predicted flood property may be output on a display 26.

An example of the computational flow for estimating the flood risk will be discussed. The labelled vector may be written as shown in equation (1) below:

$$y = a_0 + a_1 x_1 + a_2 x_2 + \cdots + a_n x_n \qquad (1)$$

In equation (1), y is the label (the flood frequency) and $x_1$ is the flood level for the location. $x_2$, $x_3$,..., $x_n$ are the rest of the elements in the labelled vector, i.e. the vector features. $a_0$ is a bias vector and $a_1$, $a_2$, ..., $a_n$ are coefficients (feature coefficients).

The objective is to estimate the coefficients $a_1$, $a_2$, ..., $a_n$ using the known values of y and $x_1$, $x_2$, $x_3$,..., $x_n$. Once the prediction model is built using the estimated coefficients, the value of y may then be predicted, using any given set of values of [$x_1$, $x_2$, $x_3$,..., $x_n$], for example, those of the cell of interest.

The above example discusses a situation in which the prediction model is trained with respect to flood frequency, i.e. the labelled vector is labelled with the flood frequency (y). This is applicable when the flood frequency of the cell of interest is the flood property to be predicted. However, if the prediction model is to be used to predict a different flood property, then the prediction model should be trained with respect to that flood property. For example, if the flood level is to be predicted, then the flood level will be y in equation (1), i.e. the labelled vector will be labelled with the flood level. $x_1$ will then be the flood frequency.

Depending on the element to be predicted (the predictand, i.e. y), the vector features are selected accordingly. The data storer enables the user to choose the predictand from a list of variables. Once the predictand is chosen, the most relevant feature variables are automatically selected for the user by the processing unit and the prediction model is obtained with respect to the selected predictand. That is, the model is trained with y as a dependent variable and $x_1$, $x_2$, $x_3$,..., $x_n$ as the independent variables. The feature variables may be automatically selected using a pre-set list of preferred features for each predictand, i.e. there is a preferred list of vector features to be used depending on the element to be estimated. If the variables in the preferred list are not available, then a feature selection and dimension reduction technique may be applied to acquire suitable features.

The coefficients in equation (1) may be estimated in several ways. A standard multiple regression technique may be used, yet, when there is a large amount of data, machine learning algorithms may perform better and thus be a more appropriate choice. In this example, an ANN is used to train the regression equation (1). In this method, a gradient descent method is used to correct the coefficients through an iteration process. With an appropriate learning rate, the solution will converge within a reasonable number of iterations. Such ANNs and other machine learning algorithms are known in the art.

The ANN benefits from large amounts of observed data. In the present case, n = 12 for equation (1). The ANN requires a certain number of historical flood observations in order to avoid overfitting the model. If there are not enough observations, the processing unit may carry out a suitable data augmentation technique to artificially increase the number of observations, to improve the training and test accuracies. The availability of observations may also determine the machine learning algorithm to be used. For example, if there are hundreds of observations then Random Forests or Nearest Neighbours algorithms may be used. On the other hand, Neural Networks may be more appropriate for millions of observations.

The data augmentation works by adding additional vectors derived from the existing vectors, while preserving the assigned labels. For example, if there are 6 different labels and each label has 100 vectors (of any length), then there will be 600 labelled data points to train the neural network for classification into 6 categories. Applying one of the standard data augmentation techniques, the available 600 labelled data points may be inflated into 6000 labelled data points. This means that 100 vectors corresponding to one particular label may be perturbed randomly by a small amount in such a way that it retains the labelling information, producing 1000 feature vectors corresponding to the same label.

The labelled vector is then be supplied to the ANN as an input through the input layer. During the forward propagation, the coefficients are estimated and during the backward propagation, the calculated error is used to nudge the value of the coefficients towards the convergence.

If $[a'_1, a'_2, a'_3, ..., a'_n]$ are the estimates of the coefficients $[a_1, a_2, a_3, ..., a_n]$ obtained from the ANN, the prediction model may be represented as shown in equation (2) below:

$$y = a'_0 + a'_1 x_1 + a'_2 x_2 + \cdots + a'_n x_n \qquad (2)$$

This model may then be used to predict flood properties at a given location. For example, to predict the flood frequency for a given flood level in the cell of interest, the flood level may be input to the model as $x_1$ and relevant cell characteristics may be input as the vector features $x_2, x_3, ..., x_n$. The flood level may be input by the user and the cell characteristics obtained from the flooding information.

Considering the prediction model of equation (2), the unlabelled vector for the cell of interest may be written as shown in equation (3), in which the x variables relate to the cell of interest:

$$y = x_1 + x_2 + \cdots + x_n \qquad (3)$$

Thus the prediction model shown in equation (2) is obtained by combining the unlabelled vector in equation (3) with the estimated coefficients $[a'_1, a'_2, a'_3, ..., a'_n]$.

In summary, multiple labels correspond to multiple frequencies or multiple water levels, depending on which flood property is to be predicted. Equation (1) is formulated for one flood frequency or flood water level. The variations in Equation (1) are provided by using data from various cells for the given frequency or water level. That is, a labelled vector is provided for each cell which has historical flood observations for the chosen flood frequency or flood level. Thus the coefficients in Equation (2) are estimated using data from multiple cells. Once the model is built using this data, there is a prediction model available to predict flood frequency (or flood level) for a given flood level (or flood frequency) along with the vector from the cell in which the prediction is required. Similarly one may build prediction models for other frequencies or levels, using data from all cells.

Thus, according to embodiments of the present invention, it is possible to obtain a prediction model and use the prediction model to estimate a flood property of a cell of interest, even if historical flood observations are not available for the cell of interest. Unlike known methods of assessing flood behaviour which try to estimate intensity of rainfall or flood, an embodiment of an aspect of the present invention may directly predict how frequently a given level of flooding will occur at a location and even at a location for which there are no historical observations.

Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality described above.

The invention may also be embodied as one or more device or apparatus programs (e.g. computer programs and computer program products) for carrying out part or all of the methods described herein. Such programs embodying the present invention may be stored on computer-readable media, or may, for example, be in the form of one or more signals. Such signals may be data signals downloadable from an Internet website, or provided on a carrier signal, or in any other form.

Figure 10 is a block diagram of a computing device, such as a data storage server, which embodies the present invention, and which may be used to implement some or all of the steps of a method embodying the present invention, and perform some or all of the tasks of apparatus of an embodiment. For example, the computing device of Figure 10 may be used to implement all, or only some, of steps S31 to S34 of the method illustrated in Figure 3 and/or steps S51 to S52 in Figure 5, to perform all, or only some, of the tasks of the apparatus shown in Figure 2 and/or the apparatus shown in 4, to perform all, or only some, of the tasks of data storer 21, processor 22, modeller 23, predictor 41, outputter 42, data aggregator 211, prediction model 25 and/or display 26.

The computing device comprises a processor 993, and memory, 994. Optionally, the computing device also includes a network interface 997 for communication with other such computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994, which may provide the data storer 21, may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement the methods described with reference to Figures 3 and/or 5 and defined in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 995 may display a representation of data stored by the computing device and may also display a cursor and dialog boxes and screens enabling interaction between a user and the programs and data stored on the computing device. The input mechanisms 996 may enable a user to input data and instructions to the computing device. The display unit 995 and input mechanisms 996 may form the output 26.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc. may be included in the computing device.

Methods embodying the present invention may be carried out on a computing device such as that illustrated in Figure 10. Such a computing device need not have every component illustrated in Figure 10, and may be composed of a subset of those components. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The above-described embodiments of the present invention may advantageously be used independently of any other of the embodiments or in any feasible combination with one or more others of the embodiments.

**Claims**

1.  An apparatus for assessing the behaviour of flooding in a cell of interest from a plurality of cells in a study region, the apparatus comprising:

    a data storer to receive and store flooding information corresponding to the plurality of cells and comprising historical flood observations for available cells of the plurality of cells;
    a processor to process the flooding information stored in the data storer; and
    a modeller to train a machine learning algorithm, using the processed flooding information, to obtain a prediction model for predicting a flood property of the cell of interest.

2.  The apparatus according to claim 1, wherein the processing of the flooding information comprises:

    fixing a flood frequency;
    extracting, from the historical flood observations, a flood level and a corresponding cell at which the fixed flood frequency has occurred;
    generating a labelled vector for the cell at which the fixed flood frequency has occurred; and
    generating an unlabelled vector for the cell of interest.

3.  The apparatus according to claim 2, wherein the labelled vector comprises the following elements and is labelled with one of the elements:

    the fixed flood frequency;
    the extracted flood level;
    a level coefficient corresponding to the flood level;
    a vector feature corresponding to the cell at which the fixed flood frequency has occurred; and
    a feature coefficient corresponding to the vector feature.

4.  The apparatus according to claim 3, wherein the level coefficient and the feature coefficient are estimated by the machine learning algorithm.

5.  The apparatus according to claim 4, wherein the prediction model comprises the unlabelled vector and unlabelled coefficients derived from the estimated level coefficient and the estimated feature coefficient.

6.  The apparatus according to any of claims 2 to 5, wherein the unlabelled vector comprises the following elements:

    a flood frequency;
    a flood level; and
    a vector feature corresponding to the cell of interest; and wherein
    one of the unlabelled vector elements is unknown, one of the unlabelled vector elements is input by a user and the remaining unlabelled vector elements are acquired from the flooding information.

7.  The apparatus according to claim 6, wherein the processor automatically selects the vector feature based on which of the unlabelled vector elements is unknown.

8.  The apparatus according to any of claims 3 to 5, wherein the vector feature is one of the following features and is acquired from the flooding information:

    a bias vector;
    land and surface characteristics;
    a horizontal distance from the nearest water body;
    a vertical distance from the nearest water body;
    a slope of the terrain;
    an observed flood level; and
    spectral information.

9.  The apparatus according to any preceding claim, wherein the processor augments the historical flood observations in the flooding information using a data augmenting technique to obtain artificial historical flood observations for a selected cell from the plurality of cells.

10. An apparatus for predicting a flood property of a cell of interest from a plurality of cells in a study region, the apparatus comprising:

   a predictor to predict the flood property of the cell of interest using a prediction model; and
   an outputter to output the predicted flood property, wherein
   the prediction model is the prediction model obtained by the apparatus of any of claims 1 to 9.

11. The apparatus according to claim 10, wherein the predicted flood property is a flood frequency or a flood level of the cell of interest.

12. The apparatus according to claim 10 or 11, further comprising a notifier to issue a warning, alarm or notification if the predicted flood property passes a predetermined threshold.

13. A method of assessing the behaviour of flooding in a cell of interest from a plurality of cells in a study region, the method comprising:

   receiving and storing flooding information corresponding to the plurality of cells and comprising historical flood observations for available cells of the plurality of cells;
   processing the stored flooding information;
   training a machine learning algorithm using the processed flooding information to obtain a prediction model for predicting a flood property of the cell of interest from the plurality of cells.

14. A method of predicting a flood property of a cell of interest from a plurality of cells in a study region, the method comprising:

   predicting the flood property of the cell of interest using a prediction model; and
   outputting the predicted flood property, wherein
   the prediction model is obtained using the method of claim 13.

15. Use of the method of claim 13 to predict a flood property, wherein the flood property to be predicted is selected by a user.

(a)

Flood Frequency

1 in 10-year
flood
boundary

1 in 10-year
flood
boundary

Flood Elevation

**Figure 1a**

(b)

Stream

**Figure 1b**

| Data Storer | 21 |
| Processor | 22 |
| Modeller | 23 |

Flooding
information

**Figure 2**

```
                        ┌──────────────────┐
                        │      Start       │
                        └──────────────────┘
                                 │
                                 ▼
      ┌───────────────────────────────────────────┐
      │   Receive and store flooding information   │─── S31
      └───────────────────────────────────────────┘
                                 │
                                 ▼
      ┌───────────────────────────────────────────┐
      │      Process stored flooding information   │─── S32
      └───────────────────────────────────────────┘
                                 │
                                 ▼
      ┌───────────────────────────────────────────┐
      │  Train machine learning algorithm using    │─── S33
      │      processed flooding information         │
      └───────────────────────────────────────────┘
                                 │
                                 ▼
      ┌───────────────────────────────────────────┐
      │           Obtain prediction model          │─── S34
      └───────────────────────────────────────────┘
                                 │
                                 ▼
                        ┌──────────────────┐
                        │       End        │
                        └──────────────────┘
```

**Figure 3**

```
              41                                    42
   ┌────────────────────┐              ┌────────────────────┐
   │ Predictor          │--------------│ Outputter          │
   │                    │              │                    │
   └────────────────────┘              └────────────────────┘
              ▲
              │
              │
     Prediction
     model
```

**Figure 4**

```
                    ┌─────────────────┐
                    │      Start       │
                    └─────────────────┘
                             │
                             ▼
        ┌──────────────────────────────────────┐
        │ Predict flood property of cell of interest │ ─── S51
        │        using prediction model          │
        └──────────────────────────────────────┘
                             │
                             ▼
        ┌──────────────────────────────────────┐
        │      Output predicted flood property    │ ─── S52
        └──────────────────────────────────────┘
                             │
                             ▼
                    ┌─────────────────┐
                    │       End        │
                    └─────────────────┘
```

**Figure 5**

**Figure 6**

212

211

**Data Storer** 21

**Data Aggregator**

213

214

22

Flood frequency – elevation curves and real time data aggregated from live sources are classified, tagged and stored on a data store.

For example, remotely sensed images from a range of satellites, user delivered information about surface conditions etc., are automatically tagged and made available for pre-processing

**Processor**

**Figure 7**

**Processor** 22

21

**Data Storer**

23

Automatic extraction of data values from frequency-elevation curves for a given location.

Automatic Selection of relevant variables for flood assessment risk from a range of sources tagged and sotred in the Data store.

**Input to Modeller**

**Figure 8**

21    22

Data Storer → Processing

Training the Neural Network

High Performance
Computing

input layer with
13 neurons
in this case

multiple hidden
layers with
about 8 neurons
each.

output layer
with 6 classes
in this case          23

Computer Screen

Feature Vector from the
location for which flood
frequency is required

Input

Trained Network

Output

The flood frequency class
for the target location

24                        25                              26

**Figure 9**

| PROCESSOR | | MEMORY | |
| --- | --- | --- | --- |
| | 993 | | 994 |

992

| DISPLAY | 995 | INPUT | 996 | NETWORK I/F | 997 |
| --- | --- | --- | --- | --- | --- |

**Figure 10**

Europäisches
Patentamt

European
Patent Office

Office européen
des brevets

## EUROPEAN SEARCH REPORT

**Application Number**

EP 17 19 0354

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/019262 A1 (DU WEI [US] ET AL) 15 January 2015 (2015-01-15) * paragraphs [0091], [0094], [0108]; claim 1 * ----- | 1-15 | INV. G06Q40/08 G06N3/02 G06N99/00 G06Q50/22 |
| | | | TECHNICAL FIELDS SEARCHED (IPC) |
| | | | G06Q G06N |

The present search report has been drawn up for all claims

| Place of search | Date of completion of the search | Examiner |
|---|---|---|
| Munich | 9 October 2017 | Diaz Calvo, Sonia |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 .................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 17 19 0354

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2017

| Patent document cited in search report | Publication date | Patent family member(s) | Publication date |
|---|---|---|---|
| US 2015019262 A1 | 15-01-2015 | AU 2014203819 A1<br>US 2015019262 A1 | 29-01-2015<br>15-01-2015 |

For more details about this annex : see Official Journal of the European Patent Office, No. 12/82